(19) Europäisches Patentamt
European Patent Office
Office européen des brevets

(11) EP 0 590 522 B1

(12) **EUROPEAN PATENT SPECIFICATION**

(45) Date of publication and mention
of the grant of the patent:
**08.07.1998  Bulletin 1998/28**

(51) Int Cl.6: **G06K 15/10**, G01D 15/10

(21) Application number: **93115380.3**

(22) Date of filing: **23.09.1993**

(54) **Thermal printer**

Thermodrucker

Imprimante thermique

(84) Designated Contracting States:
**DE FR GB NL**

(30) Priority: **28.09.1992  JP 257699/92**

(43) Date of publication of application:
**06.04.1994  Bulletin 1994/14**

(73) Proprietor: **SHARP KABUSHIKI KAISHA
Osaka-shi, Osaka-fu 545 (JP)**

(72) Inventors:
• **Yoshida, Yasuhiro
Nara-shi, Nara-ken (JP)**
• **Itou, Gen
Amagasaki-shi, Hyogo-ken (JP)**

• **Furukawa, Hiroyuki
Ueno-Shi, Mie-ken (JP)**
• **Takakura, Masaki
Higashi-Osaka-shi, Osaka-fu (JP)**

(74) Representative: **Müller, Frithjof E., Dipl.-Ing.
Patentanwälte
MÜLLER & HOFFMANN,
Innere Wiener Strasse 17
81667 München (DE)**

(56) References cited:
WO-A-89/07804          US-A- 4 786 917
US-A- 5 012 258       US-A- 5 043 742
US-A- 5 066 961

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to a printer having a thermal recording head, and more particularly to a full color printer which stably operates without being adversely effected by the previously printed image data when continuously printing a plurality of pieces of image data.

2. Description of the Related Art

In recent days, the office automation (OA) equipment such as computers and computer aided business machines, has been more and more rapidly directed to treating color data. Such OA equipment includes a color printer, a color scanner, a color copier, and so forth. However, the color printer, for example, does not always output a desired color image when printing any data. This results from the following two reasons.

The first reason is: the principle of subtractive mixture of color stimuli may apply to printing a color image. In actual, however, the additive and multiplier rules, which are the basic principle of the subtractive mixture of color stimuli, are not often established. To solve this problem, there have been conventionally proposed several kinds of color correcting circuits.

The simplest method is the following operation of a 3 X 3 matrix with respect to input signals r, g and b standing for three colors, red, green and blue, respectively.

$$\begin{pmatrix} R \\ G \\ B \end{pmatrix} = \begin{pmatrix} a11 & a12 & a13 \\ a21 & a22 & a23 \\ a31 & a32 & a33 \end{pmatrix} \begin{pmatrix} r \\ g \\ b \end{pmatrix}$$

where R, G and B are corrected signals and all to a33 are coefficients for color correction. This output may be processed through a gamma table for implementing the gamma correction.

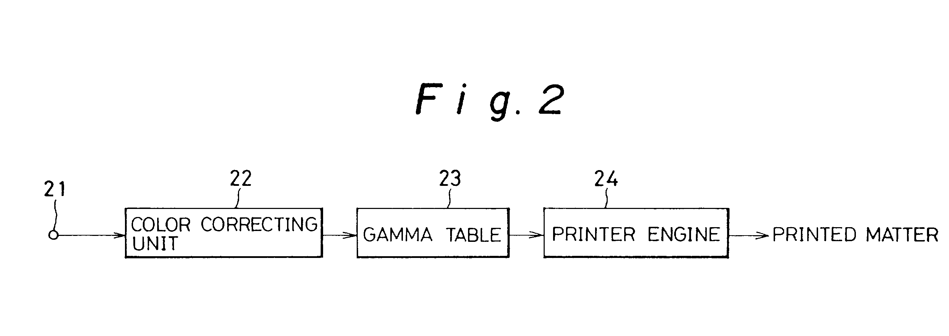

Fig. 2 is a block diagram showing the principle of such a printer. The printer is, basically, arranged to have an input terminal 21 to which an input signal is applied, a color correcting circuit 22 for performing color correction about the input signal, a gamma table 23 being connected to the color correcting circuit 22 and for performing gamma correction, and a printer engine 24 for executing a printing operation based on a signal sent from the gamma table 23.

The signal applied at the input terminal 21 is color-corrected by the color correcting circuit 22. The color-corrected signal is sent to the gamma table 23 and then is applied to the printer engine 24. Assuming that the printer is a sublimation type printer, in the printer engine24, its head is heated by the applied signal. This heating results in subliming and diffusing ink so that the ink may be transferred onto a printer paper.

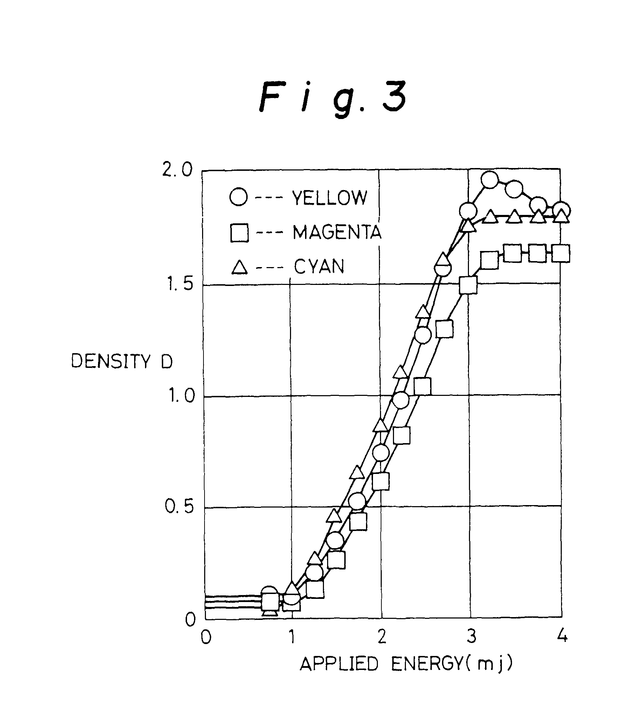

Fig. 3 shows an example of a relation between a printing density of each of three color inks (yellow, magenta, and cyan) and a quantity of energy (mJ) applied onto the head in the sublimation type printer. In this example, all of the colors yellow, magenta and cyan have substantially zero density until the applied energy reaches almost 1 mJ. When it exceeds 1 mJ, the density increases substantially linearly with the increase of the applied energy. This increase continues until the applied energy reaches about 3 mJ. When it exceeds 3 mJ, the density is kept constant if the applied energy is increased.

According to the foregoing operation, desired data is printed.

Next, the other reason why the copied output does not inevitably have the same colors as the subject document is that the printer is influenced by a temperature in the using condition and accordingly the characteristics of the printer are changed with time passage.

For example, in the sublimation type printer, the printing density is defined on a head temperature (energy applied onto the head) as illustrated in Fig. 3. The printing colors are strongly influenced by the temperature at the place where the printer is used.

By the way, the head has a slight heat-accumulating effect. Hence, the adverse effect of heat corresponding to a pattern of an image printed at the previous time is left in the head. Such accumulated heat may cause the colors to be changed at the next printing time.

For example, when the linear head is used for printing, the adverse effect of a pattern corresponding to the previous several lines appears on the line to be printed immediately after the latest printed line so that the resulting colors may change. Such an adverse effect is considered to recursively appear. That is, the later printed line gives a more adverse effect to the new printed line and the earlier printed line gives a less adverse effect. The printed result based on such an adverse effect may have an adverse effect on the data to follow.

When a planar head is used, likewise, the patterns on the previous several papers may have a thermal adverse effect on the new paper.

No technique to overcome such a problem has been proposed.

Prior art document US-A-5,066,961 discloses a tonal printer with a thermal recording head having a function for correcting pulse width on the basis of the measured temperature of the recording head and cumulative heat predicted from accumulated pulse width. This correction is however effective only for a linear thermal head.

SUMMARY OF THE INVENTION

It is an object of the invention to provide a printer which stably operates without being adversely effected by the previous printed image data when continuously printing a plurality of pieces of image data, and which eliminates the thermal adverse effect of a pattern of the data printed before being left in a head and to obtain the printed output with no color variation.

To solve this object the present invention provides a printer as specified in claim 1.

Preferred embodiments of the invention are described in the subclaims.

The printer comprises especially a storage unit for storing the previously printed image data and an operating unit for performing an operation between image data transferred from a host computer and the stored image data and printing unit for printing an image based on the operated result data as writing them in the storage unit.

A timer may be further provided for gauging a time interval from the previous printing time to this printing time to perform the operation based on the gauged time interval.

The storage unit for storing the previously printed image data serves to store the previously printed image data until the next printing time. The operating unit serves to perform the operation between the image data transferred from the host computer and the stored image data. By printing the operated result data as writing them in the storage unit, it is possible to obtain the printed output from which the thermal adverse effect of the patterns of the previously printed data given to the head is eliminated. When printing new image data, the foregoing processing is done by using the data being written at the previous time as printing the image data.

Further objects and advantages of the present invention will be apparent from the following description of the preferred embodiments of the invention as illustrated in the accompanying drawings.

BRIEF DESCRIPTION OF THE DRAWINGS

Fig. 1 is a fundamental block diagram showing the present invention.
Fig. 2 is a block diagram showing the conventional printer.
Fig. 3 is a graph showing a relation between the printing density and energy applied to the head.
Fig. 4 is a view showing an example of an image with an edge between a white portion and a black portion.
Fig. 5 is a view showing an example of a printed image with an adverse effect of the one-previous line being left.
Fig. 6 is a view showing an example of a printed image with an adverse effect of an image having an edge printed before being left.
Fig. 7 is a block diagram showing an arrangement of a system controller.

DESCRIPTION OF THE PREFERRED EMBODIMENT

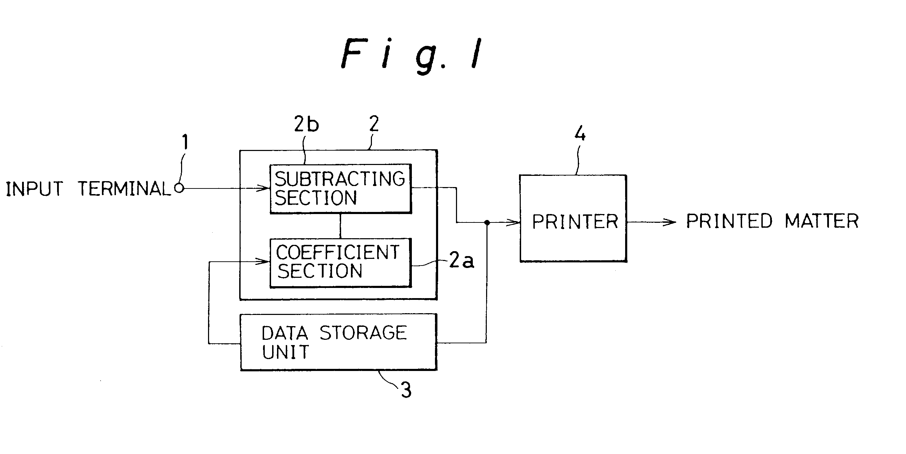

Fig. 1 is a diagram showing a printer according to an embodiment of the present invention. This printer is characterized to add the printer engine 24 shown in Fig. 2 to the data storage unit 3 and the operating unit 2.

The shown printer provides an input terminal 1 at which image signals (three input signals r, g and b standing for three colors, red, green and blue, respectively) from the host computer or image signals processed through the color correcting unit or the gamma table shown in Fig. 2 are applied. The image signals are three input signals r, g and b standing for red, green and blue, respectively. The signals applied at the input terminal 1 are fed to the operating unit 2. The operating unit 2 serves to perform the operation between these signals and the signals fed to the printer 4 at the previous printing time and feeding a signal indicating the operated result to the printer. The signals fed to the printer 4 at the previous printing time is stored in the data storage unit 3 and the output of the operating unit 2 is fed to the printer 4 and the data storage unit 3.

The data operating unit 2 consists of a coefficient section 2a for storing coefficients required for the operation and a subtracting section 2b. The previous data sent from the data storage unit 3 is applied into the subtracting section 2b through the coefficient section 2a. The subtracting section 2b receives the signal from the coefficient section 2a and the signal from the input terminal and performs a subtracting operation between these two signals. The output of the subtracting section 2b is made to be an output of the data operating unit 2.

The data storage unit 3 is made of a RAM or a harddisk and is arranged to store and hold the previously printed data until the data is printed at the next time. The data storage unit 3 has such a large volume as storing the data corresponding to the n-times previous printing.

The printer 4 is a thermal printer provided with a thermal recording head like a sublimation type printer. The thermal recording head has heating elements ranged in a linear manner or a planar manner.

Later, the description will be oriented to the operation of the printer arranged as above.

When new data to be printed is transferred from the host computer or the like to the input terminal 1, the operating unit 2 performs the next operation on the basis of the transferred data $(r, g, b)$ and the data $(R, G, B)i$ $i$ ($i$ is 1 to n) about the n-times previous printing stored in the data storage unit 3.

$$(R', G', B') = (r, g, b) - \Sigma ki \cdot (R, G, B) i$$

wherein $ki$ is a constant defined by an experiment and is stored in the coefficient section 2a. The method for deriving $ki$ will be described later.

The operated result is fed to the printer 4 in which the result is printed and to the data storage unit 3 in which the result is held. The held data is used for performing the foregoing operation at the next printing time.

Next, the method for defining $ki$ will be described. At first, the description will be oriented to the method in the case of using the linear head.

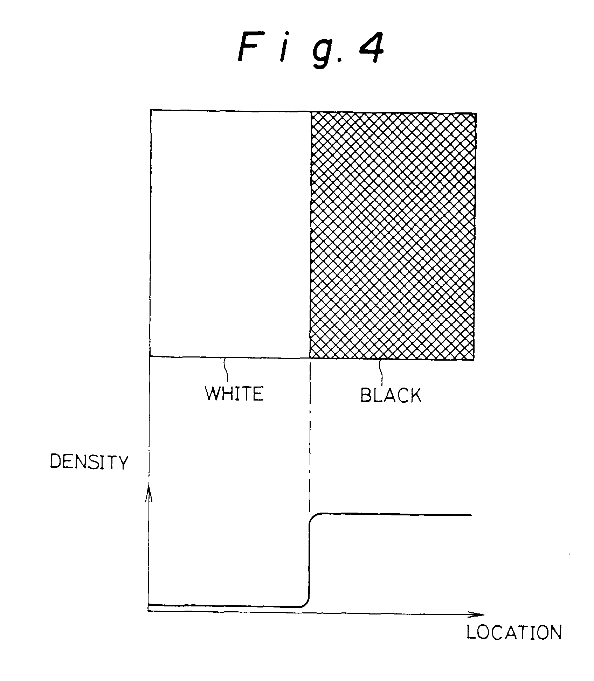

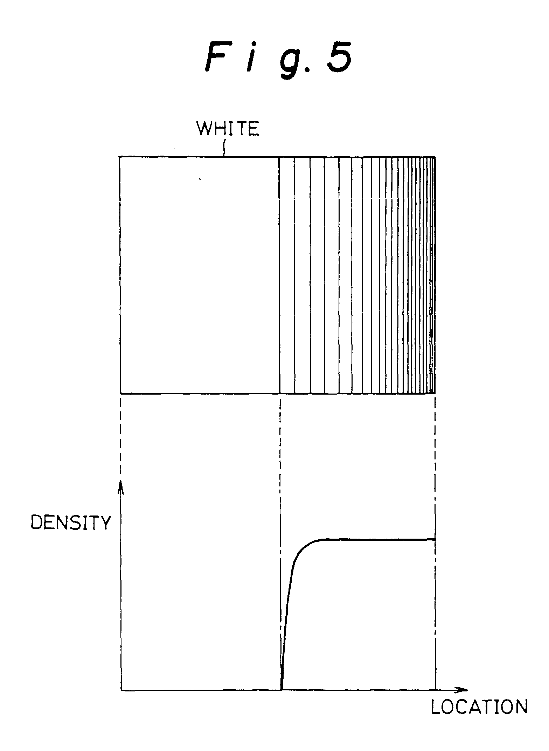

Step 1: At first, the operation is executed to create image data having an edge between a white portion and a black portion on the substantially middle area as shown in Fig. 4 and print it. The printing is done in sequence from the left hand to the right hand as viewed in Fig.4, in which $ki = 0$ is given. Since the adverse effect of the portion around the edge is left in the head, a complete edge is not represented, as shown in Fig. 5, in the obtained printed matter. In the printed result, the color is grey around the edge and is gradually transferred to the black. That is, the gradient of a density change is made a bit smaller so that the edge may not be correctly reproduced and the density may be gradually made higher.

Step 2: As changing $ki$ toward plus or minus on the basis of 0, the operation of the step 1 is repeated in a manner that a correct edge may be represented in the printed matter. A value of k given when the correct edge is finally obtained may be applied to the foregoing expression. In the case that n is not equal to 1, the steps 1 and 2 are repeated as shifting the position of the edge to be printed at the step 1 slightly, until the value of $i$ meet with n.

For the planar head, the following operation is carried out.

Step 1: The operation is executed to, at first, create image data having an edge between a white portion and a black portion on its substantially middle area and print it, in which $ki = 0$ is given.

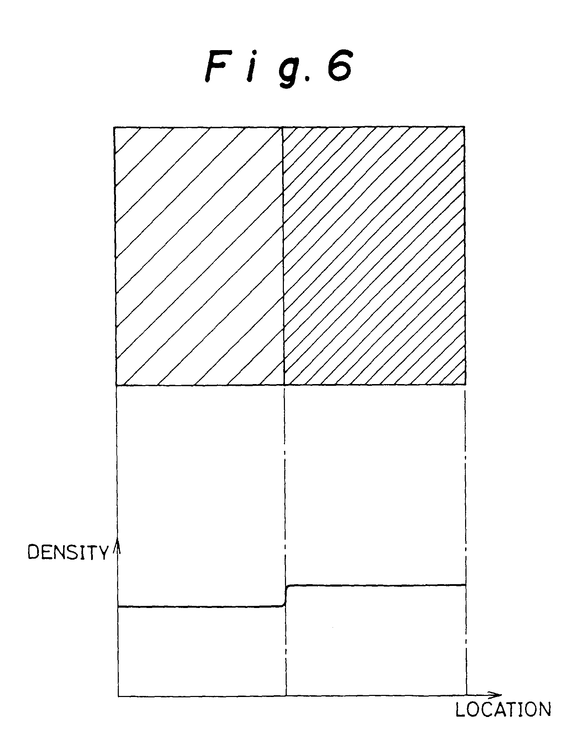

Step 2: Next, the operation is executed to create image data whose color is grey on the overall surface and print it. In the obtained printed matter, the adverse effect of the image having an edge printed before is left in the head. Hence, the overall surface is not grey as shown in Fig. 6. That is, in the image data printed before, the area for the white portion is intended grey but the area for the black portion is a bit more blackish grey.

Step 3: At the step 2, as changing $ki$ toward plus or minus on the basis of 0, the operations at the steps 1 and 2 are repeated in a manner to adjust the printed matter obtained at the step 2 to make the overall surface grey. A value of $ki$ given when the overall surface is made evenly grey is applied to the foregoing expression. In the case that n is not equal to 1, the step 2 is performed after repeating the step 1 i-times as shifting the position of the edge to be printed slightly.

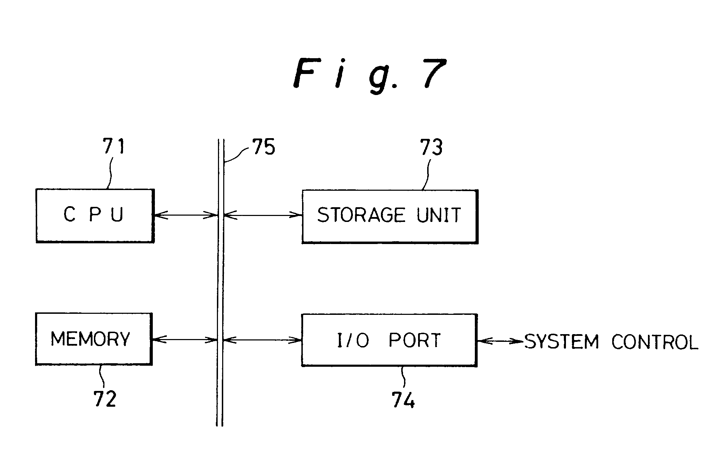

In place of the arrangement shown in Fig. 1, the printer may use a system controller pre-installed in the printer. Such a controller is, in general, arranged to have a CPU 71, a memory 72, a storage unit 73, an I/O port 74, and a bus 75 as shown in Fig. 7. Since this is a kind of computer, by adding the program designed to function as described above to the memory 72, the function shown in Fig. 1 is allowed to be easily implemented without having to add the hardware. In particular, the data storage unit 1 may be used with an image data memory used for color correction.

Further, in the case of using the planar head, as mentioned above, the adverse effect of the condensed heat is made stronger for the earlier printing. Hence, the printing interval is gauged by a timer and a value of $ki$ is changed as a time function. The value of $ki$ for this purpose is required to gauge and store a plurality of combinations according to the transfer time from the step 1 to the step 2.

With this invention, there are prepared a storage unit for storing the image data printed before and an operating unit for performing the operation between image data transferred from the host computer and the stored image data.

The operated result data is printed as they are being written in the storage unit. Hence, this invention makes it possible to feed the printed output in which the thermal adverse effect of the pattern of the data printed before is eliminated.

As a result, when printing an image with an acute edge toward the printing line or continuously printing two or more pieces of image data, it is possible to reduce the aging change of performance (color change) resulting from the data printed before and constantly keep the high performance of the product. Further, this arrangement is allowed to be implemented at a quite low cost.

As described above, the present invention generally makes contribution to improving the performance of the product.

Many widely different embodiments of the present invention may be constructed without departing from the scope of the present invention. It should be understood that the present invention is not limited to the specific embodiments described in the specification, except as defined in the appended claims.

## Claims

1. A printer for printing an image based on image data to be transferred from a host computer, said printer having a thermal recording head and further comprising;

   a storage unit (3) for storing previously printed image data;
   an operating unit (2) for performing an operation on image data transferred from a host computer using said stored image data so as to cancel a thermal adverse effect in said thermal recording head caused by previously printed data; and
   data supplying means for supplying data representative of the result of said operation to said thermal recording head to print an image from which said thermal adverse effect is eliminated, and to said storage unit (3).

2. A printer as claimed in claim 1, wherein said operating unit (2) includes a coefficient section (2a) for storing coefficients required for the operation, and substracting section (2b) for substracting said stored data from said image data using stored coefficients.

3. A printer as claimed in claim 1 or 2, wherein said storage unit (3) has a capacity for storing data corresponding to n-times previous printed image data.

4. A printer as claimed in claims 2 or 3, wherein said operating unit (2) performs the following operation on the basis of the transferred data (r,g,b) and the data (R,G,B)i (i is 1 to n) about the n-times previous printed image data stored in said data storage Unit (3),

$$(R',G',B')=(r,g,b)-\Sigma ki\cdot(R,G,B)i$$

   wherein ki is a coefficient stored in said coefficient section (2a).

5. A printer as claimed in any one of claims 1 to 4, wherein said printer further comprises a timer for gauging a time interval between the previous printing time and current printing time, and said operating unit (2) performs the operation between image data transferred from said host computer and said stored image data based on the gauged time interval.

6. A printer as claimed in claim 5, wherein said coefficient section (2a) stores a plurality of combinations of coefficients according to a plurality of time intervals, respectively, and said operating unit (2) selects one combination of the coefficients according to the gauged time interval.

## Patentansprüche

1. Drucker zum Drucken eines Bildes aufgrund von Bilddaten, die von einem Hilfscomputer zu übertragen sind, wobei der Drucker einen Thermoaufzeichnungskopf hat und außerdem aufweist:

   Eine Speichereinheit (3) zum Speichern zuvor gedruckter Bilddaten,

eine Operationseinheit (2) zum Durchführen einer Operation an den von einem Hilfscomputer übertragenen Bilddaten mittels der gespeicherten Daten, um einen thermisch nachteilhaften Effekt in dem Thermoaufzeichnungskopf infolge zuvor gedruckter Daten zu löschen, und

eine Datenliefereinrichtung zum Liefern von Daten, die das Ergebnis der Operation darstellen, zu dem Thermoaufzeichnungskopf, um ein Bild zu drucken, von welchem der thermische nachteilhafte Effekt ausgeschlossen ist, und zu der Speichereinheit (3).

2. Drucker nach Anspruch 1, bei dem die Operationseinheit (2) einen Koeffizientenabschnitt (2a) zum Speichern von Koeffizienten, die für die Operation erforderlich sind, und einen Subtrahierabschnitt (2b) zum Subrahieren der gespeicherten Daten von den Bilddaten unter Verwendung der gespeicherten Koeffizienten umfaßt.

3. Drucker nach Anspruch 1 oder 2, bei dem die Speichereinheit (3) eine Kapazität zum Speichern von Daten entsprechend dem n-fachen vorangehender gedruckter Bilddaten hat.

4. Drucker nach Anspruch 2 oder 3, bei dem die Operationseinheit (2) die folgende Operation auf der Grundlage der übertragenen Daten (r, g, b) und der Daten $(R, G, B)i$ (i beträgt 1 bis n) mit dem n-fachen zuvor gedruckter Bilddaten, die in der Datenspeichereinheit (3) gespeichert sind, ausführt:

$$(R', G', B') = (r, g, b) - \Sigma ki \cdot (R, G, B) i$$

wobei ki ein in dem Koeffizientenabschnitt (2a) gespeicherter Koeffizient ist.

5. Drucker nach einem der Ansprüche 1 bis 4, bei dem der Drucker weiterhin einen Zeitgeber zum Kalibrieren des Zeitintervalles zwischen der vorangehenden Druckzeit und der gegenwärtigen Druckzeit hat und bei dem die Operationseinheit (2) die Operation zwischen den von dem Hilfscomputer übertragenen Bilddaten und den gespeicherten Bilddaten aufgrund des kalibrierten Zeitintervalles ausführt.

6. Drucker nach Anspruch 5, bei dem der Koeffizientenabschnitt (2a) eine Vielzahl von Kombinationen von Koeffizienten jeweils gemäß einer Vielzahl von Zeitintervallen speichert, und bei dem die Operationseinheit (2) eine Kombination der Koeffizienten gemäß dem kalibrierten Zeitintervall wählt.

**Revendications**

1. Imprimante pour imprimer une image en fonction de données d'image à transférer à partir d'un ordinateur central, ladite imprimante comportant une tête d'enregistrement thermique et en outre:

une unité de mémoire (3) pour enregistrer des données d'image précédemment imprimées;
une unité de traitement (2) pour effectuer un traitement sur des données d'image transférées à partir d'un ordinateur central en utilisant lesdites données d'image enregistrées de façon à supprimer un effet thermique néfaste dans ladite tête d'enregistrement thermique dû à des données précédemment imprimées; et
un moyen de fourniture de données pour fournir des données représentatives du résultat dudit traitement à ladite tête d'enregistrement thermique, pour imprimer une image de laquelle ledit effet thermique néfaste est éliminé, et à ladite unité de mémoire (3).

2. Imprimante selon la revendication 1, dans laquelle ladite unité de traitement (2) comprend une partie coefficient (2a) pour enregistrer des coefficients nécessaires au traitement et une partie soustraction (2b) pour soustraire lesdites données enregistrées desdites données d'image en utilisant des coefficients enregistrés.

3. Imprimante selon la revendication 1 ou 2, dans laquelle ladite unité de mémoire (3) a la capacité d'enregistrer des données correspondant à des données d'images imprimées précédemment n fois.

4. Imprimante selon la revendication 2 ou 3, dans laquelle ladite unité de traitement (2) effectue le traitement suivant en fonction des données transférées (r, v, b) et des données $(R, V, B) i$ (i compris entre 1 et n) relatives aux données d'image imprimées précédemment n fois enregistrées dans ladite unité de mémoire (3),

$$(R', V', B') = (r, v, b) - \Sigma ki \cdot (R, V, B)\, i$$

où ki est un coefficient enregistré dans ladite partie coefficient (2a).

5. Imprimante selon l'une quelconque des revendications 1 à 4, dans laquelle ladite imprimante comporte en outre une minuterie pour mesurer l'intervalle de temps entre l'impression précédente et l'impression en cours, et ladite unité de traitement (2) effectue le traitement sur des données d'image transférées à partir dudit ordinateur central en utilisant lesdites données d'image enregistrées en fonction de l'intervalle de temps mesuré.

6. Imprimante selon la revendication 5, dans laquelle ladite partie coefficient (2a) enregistre une pluralité de combinaisons de coefficients en fonction d'une pluralité d'intervalles de temps, respectivement, et ladite unité de traitement (2) sélectionne une combinaison de coefficients en fonction de l'intervalle de temps mesuré.

EP 0 590 522 B1

# Fig. 1

INPUT TERMINAL

SUBTRACTING SECTION

COEFFICIENT SECTION

DATA STORAGE UNIT

PRINTER

PRINTED MATTER

# F i g. 2

# F i g. 3

# F i g. 4

WHITE     BLACK

DENSITY

LOCATION

# F i g. 5

WHITE

DENSITY

LOCATION

# F i g. 6

DENSITY

LOCATION

EP 0 590 522 B1

# Fig. 7